# EUROPÄISCHE PATENTANMELDUNG

(11) **EP 3 266 583 A1**
(43) Veröffentlichungstag der Anmeldung: **10.01.2018**
(21) Anmeldenummer: 17175032.6
(22) Anmeldetag: 08.06.2017
(51) Int. Cl.: B29C 43/24, B29C 31/04, B29K 105/18, B29D 7/01, B44C 1/00, B29B 7/60

(54) **EFFEKTFOLIEN UND VERFAHREN ZU IHRER HERSTELLUNG**

(30) Priorität: 15.06.2016 DE 102016210709
(71) Anmelder: Renolit SE, 67547 Worms (DE)
(72) Erfinder: HENNIG, Detlef, 67069 Ludwigshafen (DE); MASANEK, Frank, 66879 Reichenbach (DE); SIRLEREAUX, Serge, 67547 Worms (DE); FLOMMERSFELD, Heiko, 55546 Pfaffen-Schwabenheim (DE)
(74) Vertreter: Zellentin & Partner mbB Patentanwälte

(57) **Zusammenfassung**

Die vorliegende Erfindung betrifft ein Verfahren zur Herstellung von Effektfolien auf einem Kalander, bei dem man ein thermoplastisches Polymermaterial für die Folie aus mindestens einem thermoplastischen Polymer und einem Additiv, welches dem Absetzen und Anhaften von Pigmenten entgegenwirkt, sowie ggfs. weiteren Additiven aber ohne die Effektpigmente bereitstellt, die Effektpigmente in einem Walzwerk mit dem Polymermaterial mischt und ohne weitere Homogenisierung dem Kalander zuführt, wobei die Spaltweite im Kalander mindestens 100 % der größten Abmessung der Effektpigmente beträgt, und die Effektfolie durch Kalandrieren des mit den Effektpigmenten vermischten Polymermaterials herstellt. Die Erfindung betrifft außerdem eine Effektfolie, welche gemäß diesem Verfahren erhältlich ist, sowie Laminate, welche die Effektfolie umfassen, und deren Herstellung.

## Beschreibung

Die vorliegende Erfindung betrifft Effektfolien und Verfahren zu ihrer Herstellung.

Effektfolien enthalten besondere Pigmente, sog. Effektpigmente, die beim Betrachten z.B. 3D-Effekte, Changieren und metallisches Glitzern vermitteln bzw. als Glitter sichtbar sind. Die optischen Effekte werden auch durch bestimmte Abmessungen der Pigmente verursacht. Typischerweise haben die Effektpigmente bei einer Dicke von 1 bis 2 µm zumindest eine Flächenabmessung im Bereich von 10 µm bis hinauf zu etwa 500 µm. Solche Pigmente sind in der Regel scherempfindlich. Daher können Effektfolien bisher nur im Gießfolienverfahren oder mittels Plastisolverfahren hergestellt werden. Versucht man die Effektpigmente in Kalanderfolien einzuarbeiten, werden sie so weitgehend zerstört, dass der gewünschte optische Effekt nicht auftritt. Eine Glitteroptik kann zwar erreicht werden, die einzelnen Glitterteilchen sind aber sehr klein, so dass der Effekt nur aus der Nähe sichtbar ist. Dies ist u.a. für Spanndeckenfolien unbrauchbar.

Kalanderfolien haben auch hinsichtlich ihrer mechanischen Eigenschaften Vorteile. Außerdem sind sie unter Umweltgesichtspunkten vorteilhaft, da bei der Herstellung keine Lösemittel benötigt werden. Es wäre daher wünschenswert, Effektfolien mit dem Kalander herstellen zu können.

Die EP 2 644 645 A1 schlägt vor, hitze- und/oder druckempfindliche Pigmente in einer Plastisolschicht bereitzustellen und diese mit einer kalandrierten Folie zu laminieren. Damit wird eine Effektfolie erhalten, die sowohl die gewünschten optischen Effekte als auch die mechanischen Eigenschaften der kalandrierten Folie aufweist. Die Herstellung ist jedoch aufwändig und kostenintensiv.

Es wäre wünschenswert, dass keine separate Gießfolien- oder Plastisol-Anlage für die Effektfolien benötigt wird.

Überraschend wurde nun gefunden, dass es möglich ist, druckempfindliche Effektpigmente in kalandrierte Folien einzuarbeiten, wenn man sie erst direkt vor dem Kalander mit einem Walzwerk zumischt und dem Folienmaterial ein Additiv zufügt, welches dem Absetzen und Anhaften von Pigmenten entgegenwirkt. Die Effektpigmente müssen natürlich die beim Kalandrieren auftretenden Temperaturen vertragen, d.h. z.B. für PVC-Folien bis 220°C hitzestabil sein. Verfahrenstechnisch muss die Zumischung der Effektpigmente mittels Walzwerk unter schonenden Bedingungen und ohne eine nachfolgende Homogenisierung erfolgen, sowie im Kalander eine Spaltweite eingestellt werden, die mindestens der größten Abmessung der Effektpigmente entspricht. Damit werden die auf die Pigmente einwirkenden Scherkräfte begrenzt, welche besonders zusammen mit hohen Temperaturen die Effektpigmente zerstören, d.h. den optischen Effekt verändern. Die endgültige Foliendicke wird anschließend über einen Reckvorgang eingestellt, da in der Regel die erfindungsgemäß im Kalander erhaltene Folienstärke zu groß ist.

Die o.g. Aufgabe wird somit durch ein Verfahren zur Herstellung von Effektfolien auf einem Kalander gelöst, bei dem man ein thermoplastisches Polymermaterial für die Folie aus mindestens einem thermoplastischen Polymer und einem Additiv, welches dem Absetzen und Anhaften von Pigmenten entgegenwirkt, sowie ggfs. weiteren Additiven aber ohne die Effektpigmente bereitstellt, die Effektpigmente in einem Walzwerk mit dem Polymermaterial mischt und ohne weitere Homogenisierung dem Kalander zuführt, wobei die Spaltweite im Kalander mindestens 100 % der größten Abmessung der Effektpigmente beträgt, und die Effektfolie durch Kalandrieren des mit den Effektpigmenten vermischten Polymermaterials herstellt. Die Aufgabe wird auch durch eine Effektfolie gelöst, welche gemäß diesem Verfahren erhältlich ist.

Mit dem erfindungsgemäßen Verfahren werden häufig besonders starke Effekte erzielt, da die Effektpigmente im Kalander und besonders in dem vorzugsweise angeschlossenen Reckvorgang in Maschinenrichtung (d.h. in Längsrichtung der Folie) ausgerichtet werden. Somit wirkt ein sehr großer Anteil der Effektpigmente an der Vermittlung des optischen Effektes mit. Bei Gießfolien und im Plastisolverfahren erfolgt die Ausrichtung sehr viel weniger, der Effekt ist schwächer.

Als Polymer für die erfindungsgemäßen Folien kommt vor allem Polyvinylchlorid (PVC) in Betracht, aber auch andere thermoplastische Polymere und Polymergemische sind verwendbar, beispielsweise, aber nicht ausschließlich, Polyester, Polyolefine - insbesondere Polyethylene (PE) und Polypropylene (PP), Polyurethane (PU), Acrylnitril-Butadien-Styrol (ABS), Acrylnitril-Styrol-Acrylat (ASA).

Das Polymer ist bevorzugt PVC, beispielsweise S-PVC, vorzugsweise mit K-Werten im Bereich von 50 bis 90, und S-PVC-Mischungen mit einem Modifier (Acrylat, Methyl-Butadien-Styrol). Besonders bevorzugt wird S-PVC mit einem K-Wert von zum Beispiel von 57, 60, 64, 65, 70, 75, oder 80 verwendet, ganz besonders bevorzugt ist S-PVC mit einem K-Wert von 65.

Wie von Pigment-haltigen Folien an sich bekannt, ist ein die Absetzung und Anhaftung der Pigmente verminderndes Additiv zugefügt, geeignet sind z.B. Silikate und Al-Mg-Zn-Verbindungen.

Üblicherweise enthält das Polymermaterial weitere Additive, insbesondere Verarbeitungshilfsmittel wie Fließhilfen und Antiblockmittel, Alterungsinhibitoren wie Stabilisatoren gegen Licht und/oder Wärme, Weichmacher, und andere. Eine Übersicht gibt z.B. Gächter/Müller "Kunststoffadditive", Carl Hanser Verlag 1979.

Im Falle von PVC sind regelmäßig Weichmacher und Stabilisatoren enthalten, sowie vorzugsweise auch UV-Absorber und Antiblockmittel.

Außerdem kann das Polymermaterial Farbstoffe und/oder zusätzliche Pigmente zum Erhalt einer farbigen Folie enthalten. Diese werden vorzugsweise dem Polymermaterial zugefügt, können aber auch zusammen mit den Effektpigmenten eingemischt werden. Wichtig ist, dass die zusätzlichen Farbstoffe und Pigmente nicht zu einer opaken Folie führen, da der optische Effekt dann nicht oder kaum auftritt. Die erfindungsgemäßen Folien müssen also, abgesehen von den Effektpigmenten, transparent sein. Eine Einfärbung ist aber möglich und eröffnet besonders bei Folien, welche bei der Nutzung von hinten beleuchtet sind, zusätzliche Gestaltungsmöglichkeiten.

Erfindungsgemäß ist es weiterhin möglich auch andere scherempfindliche Pigmente, die bisher in Kalanderfolien nicht nutzbar waren, einzusetzen, wenn diese hitzestabil sind und zusammen mit den Effektpigmenten zugemischt werden.

Als Weichmacher sind prinzipiell alle bekannten Weichmacher brauchbar, beispielsweise aber nicht ausschließlich, Polyadipate, Polyphthalate, DOTP, DINCH, Phthalate, Polyolester. Bevorzugt werden polymere Weichmacher, z.B. Polyadipate und Gemische dieser mit sekundären Weichmachern, z.B. mit niedrigviskosen Phthalaten, Phosphaten und Adipaten, eingesetzt.

Die erfindungsgemäß brauchbaren Effektpigmente sind vor allem PET- und Glasbasierende Pigmente. Wichtig ist, dass hitzestabile Pigmente verwendet werden, wobei sich hitzestabil auf die für das Kalandrieren notwendige Temperatur bezieht. Diese ist wiederum vom Polymermaterial abhängig. Für das bevorzugte Polymermaterial mit PVC als Polymer beträgt die notwendige Temperatur 200 °C. Daher werden vorzugsweise Effektpigmente mit einer Hitzebeständigkeit bis 220 °C, insbesondere bis 200 °C verwendet. Die optischen Effekte werden durch die Abmessungen der Pigmente verursacht. Die Effektpigmente sind in der Regel flach, Dicken von 1 bis 2 µm sind typisch. Die Länge und/oder Breite übersteigt die Dicke um ein Vielfaches, typisch sind 10 µm bis 500 µm. Solche Pigmente können ein Changieren, d.h. einen Farbwechsel/Perlmutteffekt je nach Betrachtungswinkel verursachen. Quadratische oder rechteckige Plättchen mit einer metallischen Oberfläche (Glitter) erwecken den Eindruck von Tiefe, d.h. einen 3D Effekt, und lassen die Folie glitzern. Beides kann auch kombiniert werden.

Das erfindungsgemäße Verfahren unterscheidet sich im Punkt der Zumischung der Effektpigmente und in der Spaltweite des Kalanders von dem an sich üblichen Vorgehen beim Kalandrieren. Ansonsten können die üblichen Vorrichtungen und Verfahrensweisen zum Einsatz kommen, welche dem Fachmann gut bekannt sind, siehe z.B. Johannaber/Stoeckhert "Kunststoffmaschinenführer", Carl-Hanser Verlag, 2.Ausgabe 1984. Daher erfolgt die Erläuterung hier anhand der gängigsten Verfahrensweise, von der natürlich in bekannter Weise Abweichungen möglich sind.

Generell teilt sich die Folienherstellung mit Kalandern in die vier Abschnitte: Materialvorbereitung, Materialaufbereitung, Folienformung und Nachbehandlung. Die Materialvorbereitung umfasst das meist trockene Vormischen der Folienkomponenten in Mischern. Bei der Materialaufbereitung erfolgt ein Plastifizieren und Homogenisieren des Folienmaterials. Das Plastifizieren erfolgt heute nahezu ausschließlich in Extrudern. Früher übliche Innenmischer oder Kneter werden nicht mehr verwendet. Für die diskontinuierlich arbeitenden Innenmischer waren Walzwerke notwendig, heute werden sie vor allem noch eingesetzt, um Randstreifen oder anderes Recyclat zuzumischen sowie als Materialpuffer zwischen Plastifizierung und Kalander. Für besondere Folienqualitäten, z.B. solche, die frei von Poren oder Knötchen sein müssen, schließt sich ein Strainer an das Walzwerk an. Im Strainer wird das Material unter hohem Druck und bei geeigneter hoher Temperatur durch feinste Siebe gepresst. Die Folienformung erfolgt im Kalander. Die Nachbehandlung umfasst zumindest eine Aufnahme der Folie und Kühlung nebst der Folienaufwicklung. Häufig ist ein Prägewerk vorgesehen, mit dem eine besonders glatte oder eine geprägte Oberfläche erzeugt wird.

In einem ersten Schritt wird also nach dem Stand der Technik ein trockenes Compound aller Folienkomponenten bereitgestellt und einem Extruder, z.B. einem Planetenwalzenextruder, zugeführt. Das trockene Compound aus Polymer(en) und Additiv(en) wird in einem Mischsystem vorgemischt. Soweit vorhanden werden Pigmente üblicherweise zuvor mittels Dissolver und Reibstuhl zu einer Paste angemischt, die dem trockenen Compound vor dem Extruder zugeführt wird. Der Extruder liefert fertig gemischte und plastifizierte Materialstränge, die so dem Kalander zugeführt werden könnten. Normalerweise durchläuft das Material aber noch ein Walzwerk und ggfs. einen sog. Strainer. Das Walzwerk dient vor allem als Materialreserve zur punktgenauen Dosierung des Kalanders.

Erfindungsgemäß wird das Polymermaterial mit Ausnahme der Effektpigmente ebenfalls in einem Mischsystem gemischt und in einem Extruder plastifiziert. Die Effektpigmente werden aber weder zu einer Paste angemischt noch vor dem Extruder zugeführt.

Die Effektpigmente werden erfindungsgemäß erst nach dem Extrudieren des Polymermaterials in einem Walzwerk, insbesondere einem 2-Kammerwalzwerk, eingemischt. Dabei wird bei dem Walzwerk auf eine ausreichende Spaltgröße sowie eine niedrige Geschwindigkeit und geringe Friktion geachtet, damit die Effektpigmente nicht oder jedenfalls möglichst wenig zerkleinert werden. Typische Einstellbereiche sind 0,8 bis 2 cm, insbesondere etwa 1 cm, Spaltmaß, Geschwindigkeit von 20 bis 35 m/min., insbesondere etwa 28 m/min. bei Temperaturen im Bereich von 150 bis 200 °C, bevorzugt 160 bis 180 °C und insbesondere von etwa 170°C. Die Temperaturwerte gelten bei 2-Kammerwalzwerken für beide Kammern. Auch beim erfindungsgemäßen Verfahren kann das Walzwerk genutzt werden, um Randabschnitte und anderes Recyclat zuzumischen und dient als Materialreserve zur punktgenauen Dosierung des Kalanders.

Im Unterschied zum gängigen Verfahren im Stand der Technik muss erfindungsgemäß das vom Walzwerk erhaltene Folienmaterial direkt dem Kalander zugeführt werden. Die Beschickung des Kalanders erfolgt direkt in der Regel wie üblich über Bänder. Mögliche Metallabriebe werden ggfs. vor der Materialbeschickung am Kalander durch zusätzliche Metalldetektoren erkannt. Die im Stand der Technik mögliche Homogenisierung in einem Strainer entfällt beim erfindungsgemäßen Verfahren.

Es war äußerst überraschend, dass beim erfindungsgemäßen Verfahren eine Zumischung im Walzwerk ausreicht, um die Effektpigmente homogen in dem Polymermaterial zu verteilen. Gemäß gängiger Meinung ist dazu ein Extruder notwendig. Ohne Extruder hätte der Fachmann erwartet, dass die Effektpigmente ungleichmäßig verteilt sind und/oder sich während der Zufuhr zum Kalander absetzen. Dies ist jedoch überraschenderweise nicht der Fall.

Als Kalander sind alle an sich bekannten Typen geeignet, beispielsweise L-, F-, S-, Z-Kalander und 5 Walzen-L-Kalander. Wichtig ist, dass die Spaltweite so groß gewählt wird, dass sie mindestens der größten Abmessung der Effektpigmente entspricht, vorzugsweise oberhalb der größten Abmessung der Effektpigmente liegt. Daher beträgt die Spaltweite mindestens 100 %, bevorzugt mindestens 102 %, insbesondere 105% der größten Abmessung. Eine unnötig große Spaltweite ist aber auch zu vermeiden, da die Folienstärke entsprechend groß ist.

Typische Spaltweiten sind erfindungsgemäß 100 bis 1500 µm, vorzugsweise 120 bis 1000 µm. Die den Kalander verlassende Folie weist also anders als im Stand der Technik in der Regel noch nicht die gewünschte Stärke auf, die Folienstärke ist zumeist etwa doppelt so hoch, wie bei herkömmlichen Kalanderfolien. Um die Stärke einzustellen schließt sich daher als Nachbehandlung ein Reckvorgang an. Vorzugsweise erfolgt dies durch eine höhere Geschwindigkeit der Abzugseinheit. Erfindungsgemäß wird z.B. eine Geschwindigkeit der Kalanderwalze 4 von ca. 22 m/min und der Abzugseinheit von 43 m/min gewählt; dies entspricht einem Verhältnis von ca. 1:2.

Die mit oder ohne Reckvorgang erhaltene, erfindungsgemäße Effektfolie weist üblicherweise eine Stärke im Bereich von 50 µm bis 500 µm auf. Außerdem weist sie wie herkömmliche kalandrierte Folien gute Eigenschaften hinsichtlich Elastizität, Reißfestigkeit, Steifigkeit und Dehnverhalten auf. Zum Beispiel eine Mindestbruchdehnung von ≥ 100 % und einem 2 %-Modul von ≥ 5 N/15mm nach DIN EN ISO 5627-3/2/2.

Die erfindungsgemäße Effektfolie kann mit einer oder mehreren weiteren Folien und/oder anderen Bahnen laminiert werden, ggfs. nach Auftrag eines Primers oder anderer die Haftung verbessernder Maßnahmen. Die erfindungsgemäßen Folien und Laminate daraus können auch mit Klebstoffschichten versehen werden.

Die optischen Effekte lassen sich durch Laminieren der transparenten Effektfolie mit einer opaken Folie verstärken. Bei Laminierung mit einer bevorzugt dunkel gefärbten Folie zeigt eine erfindungsgemäße Effektfolie mit Glitterpigmenten z.B. einen besonders starken 3D-Effekt.

Vorzugsweise erfolgt das Laminieren durch ein Erwärmen der Effektfolie und der sog. Dublierfolie und Zusammenführen der beiden Folien in einem Walzenspalt, wo die Verbindung unter Einwirkung von Druck und Temperatur erreicht wird. Es versteht sich, dass die Dublierfolie ein Material enthalten muss, welches die Haftung mit der Effektfolie durch Druck und Hitze erlaubt. Dieses Verfahren ist an sich bekannt. Ein Vorteil dieses Verfahrens ist die Möglichkeit, beim Laminieren auch die Oberfläche der Folien zu beeinflussen. Je nach Oberfläche der Walzen können besonders glatte, aber auch geprägte Folienoberflächen erzielt werden. Andere Laminierverfahren sind ebenfalls möglich, wie ein Verkleben z.B. mit Hilfe von Heißklebstoffen. Das Laminieren kann in-line oder off-line erfolgen.

Die Effektfolie bzw. Laminate mit ihr eignen sich unter anderem als Dekorfolien, Spannfolien für Decke und Wand, Werbefolien, Kaschierfolien für den Messebau, Fußbodenfolien, Plotter- und Digitaldruckfolien, Folien für den Außen- und Automobilbereich, Möbelfolien und Schwimmbadfolien.

Die Erfindung soll anhand der folgenden Beispiele und der beigefügten Figuren erläutert werden, ohne jedoch auf die speziell beschriebenen Ausführungsformen beschränkt zu sein. Die Erfindung bezieht sich auch auf sämtliche Kombinationen von bevorzugten Ausgestaltungen, soweit diese sich nicht gegenseitig ausschließen.

Soweit nichts anderes angegeben ist oder sich aus dem Zusammenhang zwingend anders ergibt, beziehen sich Prozentangaben auf das Gewicht, im Zweifel auf das Gesamtgewicht der Mischung. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Eine Effektfolie wurde gemäß folgender Rezeptur hergestellt:

| | |
|---|---|
| PVC K-Wert 65 | 73,0 kg |
| Fließhilfe | 1,5 kg |
| polymerer Weichmacher | 25,0 kg |
| sekundärer Weichmacher | 2,0 kg |
| Stabilisator | 2,8 kg |
| UV-Absorber | 1,0 kg |
| Antiblockmittel | 0,2 kg |
| Additiv zur Verhinderung | 0,5 kg |

der Absetz- und Anhaftungsverhaltens der Pigmente.

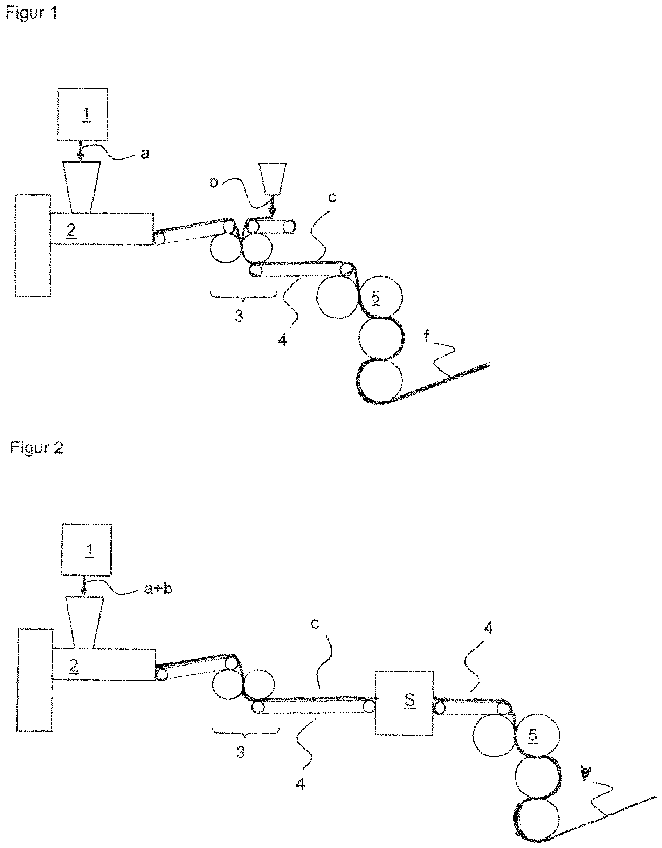

Figur 1 veranschaulicht das dazu verwendete erfindungsgemäße Verfahren. Hierbei wird in einem ersten Schritt aus PVC, Fließhilfe, den Weichmachern, dem Stabilisator, dem UV-Absorber, dem Antiblockmittel und dem Additiv zur Verhinderung des Absetzens und Anhaftens von Pigmenten in einem Mischsystem 1 ein trockenes Polymermaterial a gemischt. Dieses durchläuft einen Planetenwalzenextruder 2 und das transparente Extrudat wird einem 2-Kammerwalzwerk 3 zugeführt. Parallel wird diesem das Effektpigment b gravimetrisch zudosiert. Im Beispiel wurde 1% Effektpigment PET verwendet. Im Walzwerk 3 wird eine Spaltweite von 10 mm und eine Geschwindigkeit von 27 m/min eingestellt. Die das Walzwerk 3 verlassende Bahn c wird über Bänder 4 direkt dem Kalander 5 zugeführt. Dort wird bei einer Temperatur von 200°C und einer Geschwindigkeit von 22 m/min mit einer Spaltweite von 140 µm die Effektfolie f kalandriert.

Um die Stärke zu reduzieren wird die Folie f mit Abzugswalzen, die im Verhältnis 1:2 schneller laufen als die letzte Walze des Kalanders auf 70 µm gereckt. Es erfolgt also ein Recken über die Abzugswalzengeschwindigkeit.

Die fertige hochtransparente Effektfolie weist eine Dicke von 70 µm auf. Sie besitzt weitestgehend dieselben physikalischen Eigenschaften, wie eine zu dublierende, opake Unterfolie. Typische Folien- bzw. Laminatstärken sind z.B. etwa 200 µm für Spannfolien und ca. 120 µm für Folien zur Verwendung im Automobilbereich.

Im Vergleich zum erfindungsgemäßen Verfahren von Figur 1 ist in Figur 2 das Kalanderverfahren gemäß Stand der Technik gezeigt. Hierbei werden die Pigmente bereits im Mischsystem 1 zugefügt. Handelt es sich um druck- und scherempfindliche Pigmente, so erfolgt durch die Beanspruchung im Extruder 2 und dem zusätzlich verwendeten Strainer S eine weitgehende Zerstörung. Auch die engeren Spalte in Walzwerk 3 und Kalander 5 bewirken eine Feinmahlung der Pigmente. Die erhaltene Folie v zeigt keine oder allenfalls sehr geringe optische Effekte. Selbst wenn man im Kalander eine ausreichende Spaltgröße einstellt, ist die zuvor im Extruder, Walzwerk und Strainer erfolgte Zerstörung zu weitgehend.

Es bedarf der erfindungsgemäß vorgeschlagenen Kombination einer Zumischung der Effektpigmente erst im Walzwerk mit der direkten Zufuhr zum Kalander und der Einstellung ausreichend großer Spalte im Walzwerk und Kalander, um die erfindungsgemäße Folie zu erhalten.

Im Vergleich zu Gießfolien oder Plastisolfolien ist die erfindungsgemäße Folie frei von Aerosolen und Verdünnern (Vorteil hinsichtlich der Umwelt und Arbeitssicherheit). Sie weist hohe Bruchdehnungen und Module auf und ist kostengünstiger herzustellen als Cast- und Plastisolfolien und ist recycelbar.

Die Effektpigmente sind in den erfindungsgemäßen Folien regelmäßig vollständiger ausgerichtet, die optischen Effekte damit deutlicher. Weder beim Plastisol- noch beim Castverfahren besteht ein verfahrenstechnischer Anstoß zur Ausrichtung der Effektpigmente, das Kalandrieren und Recken bietet dagegen einen solchen.

Dazu kommt, dass die brauchbaren Effektpigmente erfindungsgemäß weniger begrenzt sind als beim Cast- und Plastisolverfahren. Ein Plastisol bzw. Castfolienmaterial muss eine bestimmte Viskosität haben, um die gewünschten Folien herstellen zu können. Es wurde beobachtet, dass leichte Pigmente beim Aufstreichen des Plastisol aufschwimmen. Schwere Pigmente neigen dagegen zum Absetzen. Eine gleichmäßige, ausgerichtete Verteilung der Effektpigmente ist nur schwer und für viele Effektpigmente mit zu hoher oder zu niedriger Dichte gar nicht zu erreichen.

### Bezugszeichenliste

- 1: Mischsystem
- 2: Extruder
- 3: Walzwerk
- 4: Bänder
- 5: Kalander

- S: Strainer

- a: trockene Mischung Polymermaterial
- b: Effektpigment
- c: Folienbahn
- f: Effektfolie
- v: Vergleichsfolie

## Patentansprüche

1. Verfahren zur Herstellung von Effektfolien durch Kalandrieren, umfassend die Schritte:
- trockenes Mischen von mindestens einem thermoplastischen Polymer und mindestens einem Additiv zur Verhinderung des Absetzen und Anhaftens von Pigmenten zu einem thermoplastischen Polymermaterial
- Homogenisieren des Polymermaterials in einem Extruder
- Zuführen des Polymermaterials und von Effektpigment zu einem Walzwerk und Mischen bei einem Spaltmaß oberhalb der größten Abmessung der Effektpigmente
- direktes Leiten der erhaltenen Mischung zu einem Kalander und Kalandrieren der Effektfolie bei einer Spaltweite, die mindestens der größten Abmessung der Effektpigmente entspricht.

2. Verfahren gemäß Anspruch 1, **dadurch gekennzeichnet, dass** die Effektfolie nach dem Kalandrieren in einem Verhältnis von 1:1,1 bis 1:4, vorzugsweise von etwa 1:2, gereckt wird.

3. Verfahren gemäß Anspruch 1 oder 2, **dadurch gekennzeichnet, dass** das Polymer ausgewählt wird unter Polyvinylchlorid, Polyolefin, Polyurethan, Acrylnitril-Butadien-Styrol und Acrylnitril-Styrol-Acrylat.

4. Verfahren gemäß einem der Ansprüche 1 bis 3, **dadurch gekennzeichnet, dass** als weitere Additive Stabilisatoren und/oder Verarbeitungshilfsmittel verwendet werden.

5. Verfahren gemäß einem der Ansprüche 1 bis 4, **dadurch gekennzeichnet, dass** als weitere Additive Weichmacher verwendet werden, vorzugsweise Polyadipate, Polyphthalate, Polyolester, DOTP, DINCH, Phthalate, Phosphate, Adipate und Gemische davon.

6. Verfahren gemäß Anspruch 5, **dadurch gekennzeichnet, dass** Gemische von polymeren Weichmachern und niedrigviskosen Phthalaten, Phosphaten, Adipaten als Weichmacher verwendet werden.

7. Verfahren gemäß einem der Ansprüche 1 bis 6, **dadurch gekennzeichnet, dass** als Effektpigmente Glas- und Polyester-basierte Pigmente verwendet werden.

8. Verfahren gemäß einem der Ansprüche 1 bis 7, **dadurch gekennzeichnet, dass** die Folie eine Mindestbruchdehnung von ≥ 100 % und einen 2 % Modul von ≥ 5 N/15mm nach DIN EN ISO 5627-3/2/2 aufweist.

9. Verfahren gemäß einem der Ansprüche 1 bis 8, **dadurch gekennzeichnet, dass** die Folie mit weiteren Folien oder anderen Bahnen laminiert wird.

10. Verfahren gemäß Anspruch 9, **dadurch gekennzeichnet, dass** die Folie mit einer opaken Dublierfolie, vorzugsweise einer dunkel gefärbten opaken Folie laminiert wird.

11. Verfahren gemäß Anspruch 10, **dadurch gekennzeichnet, dass** die Folie und die Dublierfolie erwärmt und in einem Walzenspalt unter Druck verbunden werden.

12. Folie erhältlich durch ein Verfahren gemäß einem der Ansprüche 1 bis 8.

13. Laminat erhältlich durch ein Verfahren gemäß einem der Ansprüche 9 bis 11.
